# EUROPEAN PATENT SPECIFICATION

(11) **EP 3 478 025 B1**
(45) Date of publication and mention of the grant of the patent: **18.08.2021**
(21) Application number: 18197201.9
(22) Date of filing: 27.09.2018
(51) Int. Cl.: H05B 3/14, H05B 1/02

(54) **SELF-REGULATING HEATER COMPENSATION**
SELBSTREGELNDE HEIZERKOMPENSATION
COMPENSATION DE CHAUFFAGE À RÉGULATION AUTOMATIQUE

(30) Priority: 29.09.2017 US 201715720340
(43) Date of publication of application: 01.05.2019
(73) Proprietor: Rosemount Aerospace Inc., Burnsville, MN 55306-4898 (US)
(72) Inventor: KRUEGER, William B., Bloomington, MN 55425 (US)
(74) Representative: Dehns

(56) References cited:
- EP-A2- 1 980 860
- DE-A1-102008 061 475
- US-A- 4 121 088

## Description

### BACKGROUND

Barium titanate electrical heater arrays are widely used in aircraft applications. Barium titanate heaters provide a simple and reliable alternative to electrical resistance heaters controlled with external electronic circuits. The self-regulating nature of barium titanate under operating conditions eliminates the need for external control circuits. Electrical resistance of barium titanate heaters increases dramatically at temperatures above a given set point temperature. A typical set point temperature would be 73 degrees Celsius as will be used herein. Temperatures above the set point cause rapid increases in the heater resistance, which in turn cause the current to drop significantly, preventing the barium titanate heater from overheating the local region.

DE 102008061475 A1 discloses a motor vehicle comprising at least one heatable nozzle for window cleaning with a temperature-dependent heating resistor which can be acted upon by a voltage for temperature-dependent heating.

EP 1980860 A2 discloses a probe for an aircraft having pneumatic lines that are thermally isolated.

US 4121088 A discloses a positive temperature coefficient resistance heater assembly used in combination with an angle of attack vane to provide automatic means for maintaining the temperature of the vane at a level which will de-ice the vane.

### SUMMARY

From a first aspect, a heating system as claimed in claim 1 is provided.

The heating system can optionally include any one or more of the following features, configurations and/or additional components:
The thermistor can be a negative temperature coefficient thermistor.

The current limiting resistor can be configured to limit current flowing therethrough to half the current threshold level.

A resistance of the current limiting resistor can be configured to remain substantially constant.

The heater array can be a barium titanate heater array.

The region can be at least a portion of an angle of attack sensor.

The current sensor can be a shunt resistor.

From a further aspect, a method as claimed in claim 8 is provided.

The method can optionally include any one or more of the following features, configurations and/or additional components:
The thermistor can be a negative temperature coefficient thermistor.
The resistor can be configured to limit the second portion of the current to half the current threshold level.

A resistance of the resistor can be configured to remain substantially constant.

The heater array can be a barium titanate heater array.

The region can be at least a portion of an angle of attack sensor.

The current sensor can be a shunt resistor.

Providing an alert in response to the measured current falling below the threshold current level.

### BRIEF DESCRIPTION OF THE DRAWINGS

FIG. 1 is a perspective view of an angle of attack sensor utilizing heating circuits.
FIG. 2 is a schematic diagram of a heating system including a compensation circuit.
FIG. 3 is a graph illustrating the change in resistance of a barium titanate heater array over temperature.
FIG. 4 is a flow diagram depicting a process for current compensation of a heater circuit.

### DETAILED DESCRIPTION

Apparatus, systems, and associated methods relate to self-regulating heater compensation using a compensation circuit electrically coupled to a heater circuit in parallel. In some applications, such as an aircraft sensor, self-regulating heater circuits are used on angle of attack sensors, side slip angle sensors, integral static port sensors, and/or other sensors of an aircraft. The self-regulating heater current is monitored to ensure proper operation and an alert is output when the current falls below a current threshold level. In hot environments, such as desert regions, self-regulating heaters may draw current that falls below the current threshold level, causing a false alarm. This can cause the aircraft to be grounded, wasting time and money. Using the apparatus, systems, and associated methods herein, allows for the compensation circuit to bring the current above the current threshold level when the self-regulating heater is in operable condition.

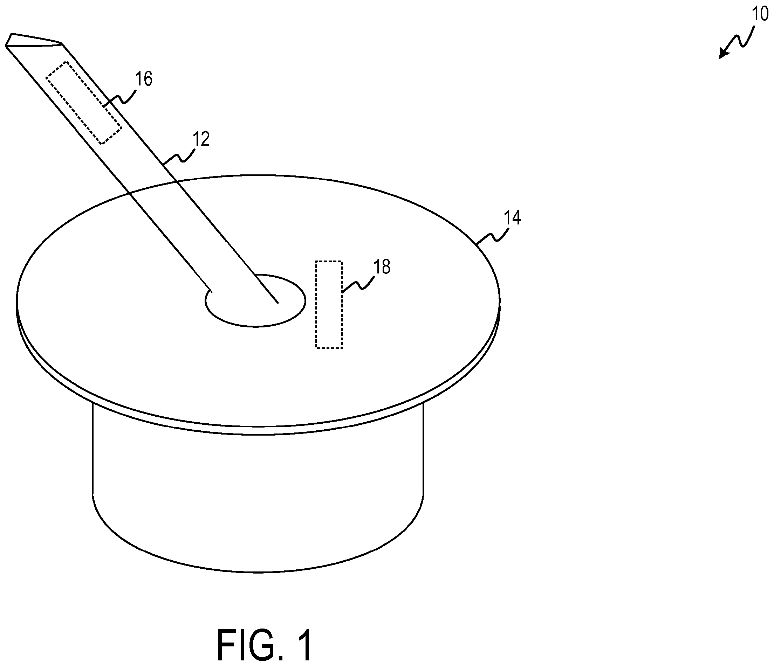

FIG. 1 is a perspective view of an angle of attack sensor 10 including vane 12, sensor housing 14, heating circuit 16, and heating circuit 18. Vane 12 rotates and aligns itself with a local airflow. Sensor housing 14 contains circuitry to compare the angle of vane 12 to a reference line to determine the local angle of attack. When angle of attack sensor 10 is exposed to freezing conditions, vane 12 and sensor housing 14 can accumulate ice, preventing vane 12 from rotating with the local airflow. When vane 12 cannot rotate, angle of attack sensor 10 will cease to provide an accurate measure of the local angle of attack. Heating circuits 16 and 18 are provided to prevent the accumulation of ice and the resulting inoperability of angle of attack sensor 10.

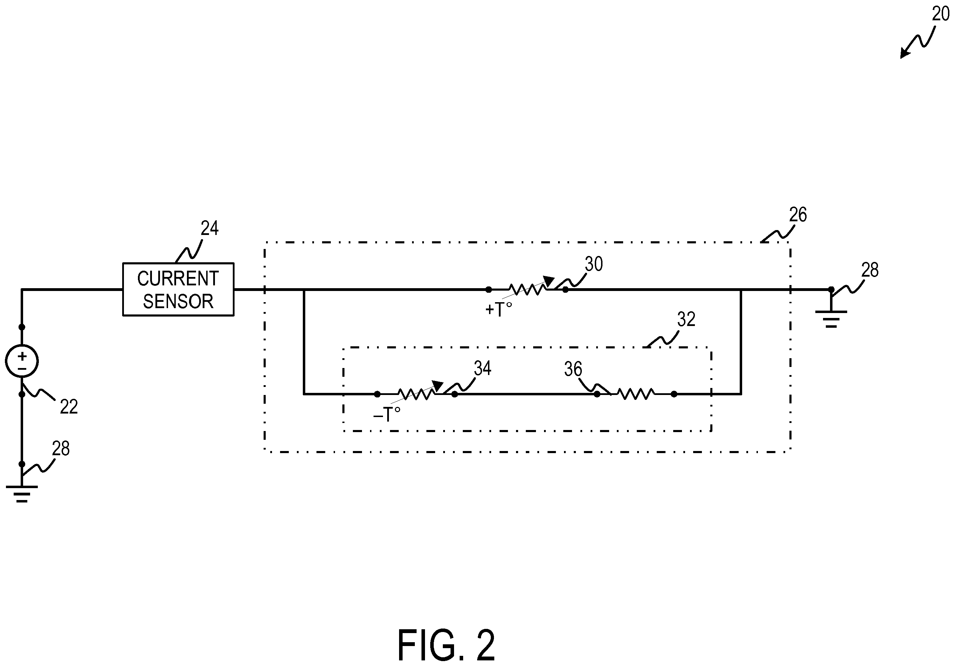

FIG. 2 is a schematic diagram of heating system 20 including voltage source 22, current sensor 24, heating circuit 26, and ground connections 28. Heating circuit 26 includes heater array 30 and compensation circuit 32. Compensation circuit 32 includes thermistor 34 and current limiting resistor 36. Heating circuit 26 can be representative of heater circuits 16 and 18 of FIG. 1.

Voltage source 22 provides current to heater circuit 26. Current sensor 24 measures the current provided to heater circuit 26. In one example, current sensor 24 is a shunt resistor. In a further example, current sensor 24 is an integrated circuit configured to sense the current provided to heater circuit 26. Current sensor 24 is configured to provide an alert if the current provided by voltage source 22 falls below a threshold current level. The current provided by voltage source 22 is determined by the total resistance of heater circuit 26. Heater circuit 26 includes heater array 30 electrically coupled in parallel to compensation circuit 32. A first portion of the current is provided to heater array 30, and a second portion of the current is provided to compensation circuit 32. Heater array 30 provides heat to a region using the first portion of the current provided by voltage source 22. In one example, heater array 30 is a barium titanate heater array.

As the resistance of heater array 30 increases, the first portion of the current provided by voltage source 22 decreases. High temperatures cause the resistance of heater array 30 to become so high that the first portion of the current falls below the threshold current level of sensor 24. Without additional current, sensor 24 will provide an alert. During high temperatures compensation circuit 32 is configured to increase current draw causing the second portion of the current to increase. The increase of the second portion of the current is sufficient to maintain the current supplied to heating circuit 20 above the threshold when heater array 30 is operative. However, the increase in the second portion of the circuit is insufficient to maintain the current above the threshold when heater array 30 is inoperative. Heater array 30 can become inoperative when damaged which causes the resistance of heater array 30 to increase beyond a typical range or become an open circuit. In some examples, the compensation circuit includes a thermistor and a current limiting resistor electrically coupled in series. The current limiting resistor is configured to limit the second portion of the current to be less than the current threshold level. In one example, the current limiting resistor is configured to limit the second portion of the current to half the current threshold limit. In one example, a resistance of the current limiting resistor is configured to remain substantially constant. Limiting the second portion of the current in this manner allows sensor 24 to provide an alert if heater array 30 becomes inoperable, such as failing in an open circuit condition, but still provides enough current to compensate for high temperature conditions. In one example, the thermistor is a negative temperature coefficient resistor. Negative temperature coefficient thermistors decrease in resistance as the temperature increases.

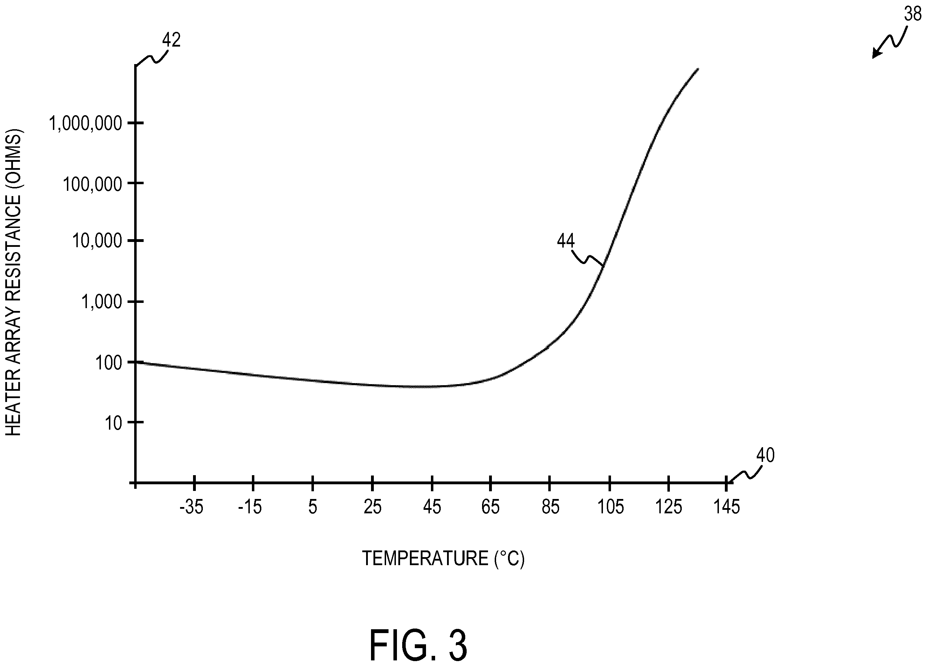

FIG. 3 is graph 38 illustrating the change in resistance of a barium titanate heater array, such as heater array 30, over temperature. Graph 38 plots temperature in degrees Celsius on x-axis 40 and heater array resistance on y-axis 42. Curve 44 shows the resistance of a barium titanate heater over temperature. As shown, y-axis 42 is logarithmic. Curve 44 begins to slope upwards significantly at about 73 degrees Celsius. Significantly above the 73 degrees Celsius set point temperature the current through a barium titanate heater array would be very small, and would likely be below a threshold current level of a monitoring system or sensor, such as sensor 24. Temperatures of this magnitude can be encountered, for example, when an aircraft is in hot conditions such as in the Middle East, or other desert regions.

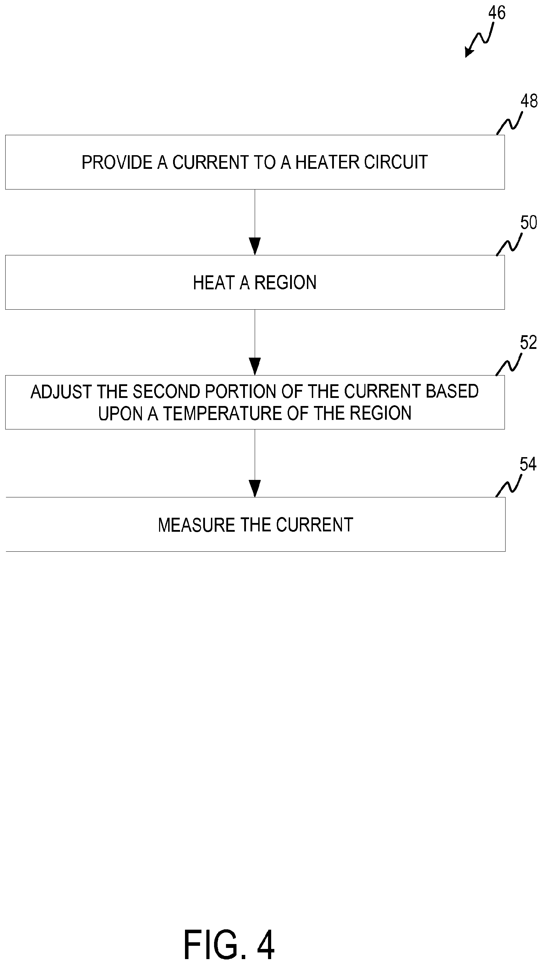

FIG. 4 is a flow diagram depicting process 46 for current compensation of a heater circuit. For purposes of clarity and ease of discussion, the example operations are described below within the context of heating system 20 of FIG. 2.

At step 48, current is provided to heater circuit 26 using voltage source 22. A first portion of the current is provided to heater array 30 of heater circuit 26. A second portion of the current is provided to compensation circuit 32. At step, 50 a region is heated using the heater array. At step 52, the second portion of the current is adjusted based upon the temperature of the region. As temperature of the region increases the first portion of the current is decreased by heater array 30. The second portion of the current is increased using the compensation circuit in response to the temperature of the region increasing. In one example, thermistor 34 decreases in resistance in response to the temperature of the region increasing, thereby increasing the second portion of the current. The second portion of the current is limited using current limiting resistor 36. In one example, current limiting resistor limits the second portion of the current to half of a current threshold level. In a further example, current limiting resistor is configured to have a substantially constant resistance. At step 54, the current provided to heater circuit 26 is measured using current sensor 24. In one example, current sensor 24 is configured to provide an alert in response to the measured current falling below the threshold current level.

Accordingly, implementing techniques of this disclosure, self-regulating heater compensation using a compensation circuit allows current monitoring without false alarms due to high temperature conditions. Using the compensation circuit described herein, a self-regulating heater can be used in conjunction with a current monitor. This helps to prevent false alarms, thereby preventing lost time and money due to the false alarms.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A heating system (20) comprising:
a voltage source (22) configured to provide a current;
a heater circuit (16, 18 26) electrically coupled to the voltage source, the heater circuit comprising:
a heater array (30) configured to provide heat to a region using the current; and
a compensation circuit (32) electrically coupled to the voltage source in parallel with the heater array, the compensation circuit configured to maintain the current above a threshold current level when the heater array is operable;
a current sensor (24) configured to measure a level of the current to the heater circuit and output an alert in response to the current falling below the threshold current level;
**characterised in that** the compensation circuit (32) comprises a thermistor (34) and a current limiting resistor (36) electrically coupled to the thermistor in series, the current limiting resistor configured to prevent the current from rising above the threshold current level when the heater array is inoperable.

2. The heating system of claim 1, wherein the thermistor (34) is a negative temperature coefficient thermistor.

3. The heating system of claim 1 or 2, wherein the current limiting resistor (36) is configured to limit current flowing therethrough to half the current threshold level.

4. The heating system of claim 1, 2 or 3, wherein a resistance of the current limiting resistor (36) is configured to remain substantially constant.

5. The heating system of any preceding claim, wherein the heater array (30) is a barium titanate heater array.

6. The heating system of any preceding claim, wherein the region is at least a portion of an angle of attack sensor (10).

7. The heating system of any preceding claim, wherein the current sensor (24) is a shunt resistor.

8. A method comprising:
providing a current to a heater circuit (16, 18, 26) using a voltage source (22), including:
providing a first portion of the current to a heater array (30) of the heater circuit; and
providing a second portion of the current to a compensation circuit (32) of the heater circuit connected in parallel to the heater array;
heating a region using the heater array (30);
adjusting, using the compensation circuit (32), the second portion of the current based on a temperature of the region, such that a sum of the first portion of the current and the second portion of the current corresponding to the current provided to the heater circuit (16, 18, 26) is maintained above a threshold current level when the heater array (30) is operable; and
measuring the current using a current sensor (24);
**characterized in that** adjusting the second portion of the current includes increasing the second portion of the current using a thermistor (34) of the compensation circuit (32); and **in that** adjusting the second portion of the current includes limiting the second portion of the current using a resistor (36) of the compensation circuit, the resistor in series with the thermistor.

9. The method of claim 8, wherein the thermistor (34) is a negative temperature coefficient thermistor.

10. The method of claim 8 or 9, wherein the resistor (36) is configured to limit the second portion of the current to half the current threshold level.

11. The method of claim 8, 9 or 10, wherein a resistance of the resistor (36) is configured to remain substantially constant.

12. The method of any of claims 8 to 11, wherein the region is at least a portion of an angle of attack sensor (10).

13. The method of any of claims 8 to 12, further comprising providing an alert in response to the measured current falling below the threshold current level.

## Patentansprüche

1. Heizsystem (20), umfassend:
eine Spannungsquelle (22), die zum Bereitstellen eines Stroms konfiguriert ist;
einen Heizkreis (16, 18 26), der elektrisch an die Spannungsquelle gekoppelt ist, wobei der Heizkreis Folgendes umfasst:
ein Heizerarray (30), das zum Bereitstellen von Wärme an eine Region unter Verwendung des Stroms konfiguriert ist; und
einen Kompensationsschaltkreis (32), der elektrisch an die Spannungsquelle parallel zu dem Heizerarray gekoppelt ist, wobei der Kompensationsschaltkreis zum Halten des Stroms über einem Schwellenstrompegel konfiguriert ist, wenn das Heizerarray betreibbar ist;
einen Stromsensor (24), der zum Messen eines Pegels des Stroms zu dem Heizkreis und Ausgeben einer Warnmeldung als Reaktion darauf, dass der Strom unter den Schwellenstrompegel fällt, konfiguriert ist;
**dadurch gekennzeichnet, dass** der Kompensationsschaltkreis (32) einen Thermistor (34) und einen Strombegrenzungswiderstand (36) umfasst, der elektrisch an den in Reihe geschalteten Thermistor gekoppelt ist, wobei der Strombegrenzungswiderstand dazu konfiguriert ist, zu verhindern, dass der Strom über den Schwellenstrompegel ansteigt, wenn das Heizerarray nicht betreibbar ist.

2. Heizsystem nach Anspruch 1, wobei der Thermistor (34) ein Thermistor mit negativem Temperaturkoeffizienten ist.

3. Heizsystem nach Anspruch 1 oder 2, wobei der Strombegrenzungswiderstand (36) dazu konfiguriert ist, einen Strom, der durch dieses strömt, auf die Hälfte des Schwellenstrompegels zu begrenzen.

4. Heizsystem nach Anspruch 1, 2 oder 3, wobei ein Widerstand des Strombegrenzungswiderstands (36) dazu konfiguriert ist, im Wesentlichen konstant zu bleiben.

5. Heizsystem nach einem der vorhergehenden Ansprüche, wobei das Heizerarray (30) ein Bariumtitanat-Heizerarray ist.

6. Heizsystem nach einem der vorhergehenden Ansprüche, wobei die Region mindestens ein Abschnitt von einem Anstellwinkelsensor (10) ist.

7. Heizsystem nach einem der vorhergehenden Ansprüche, wobei der Stromsensor (24) ein Shunt-Widerstand ist.

8. Verfahren, umfassend:
Bereitstellen eines Stroms an einen Heizkreis (16, 18, 26) unter Verwendung einer Spannungsquelle (22), beinhaltend:
Bereitstellen eines ersten Abschnitts des Stroms an ein Heizerarray (30) des Heizkreises; und
Bereitstellen eines zweiten Abschnitts des Stroms an einen Kompensationsschaltkreis (32) des Heizkreises, der parallel mit dem Heizerarray verbunden ist;
Heizen einer Region unter Verwendung des Heizerarrays (30);
Einstellen des zweiten Abschnitts des Stroms unter Verwendung des Kompensationsschaltkreises (32) basierend auf einer Temperatur der Region, sodass eine Summe des ersten Abschnitts des Stroms und des zweiten Abschnitts des Stroms entsprechend dem Strom, der an dem Heizkreis (16, 18, 26) bereitgestellt wird, über einem Schwellenstrompegel gehalten wird, wenn das Heizerarray (30) betreibbar ist; und
Messen des Stroms unter Verwendung eines Stromsensors (24);
**dadurch gekennzeichnet, dass**
das Einstellen des zweiten Abschnitts des Stroms ein Erhöhen des zweiten Abschnitts des Stroms unter Verwendung eines Thermistors (34) des Kompensationsschaltkreises (32) beinhaltet;
und dadurch, dass das Einstellen des zweiten Abschnitts des Stroms ein Begrenzen des zweiten Abschnitts des Stroms unter Verwendung eines Widerstands (36) des Kompensationsschaltkreises beinhaltet, wobei der Widerstand in Reihe mit dem Thermistor geschaltet ist.

9. Verfahren nach Anspruch 8, wobei der Thermistor (34) ein Thermistor mit negativem Temperaturkoeffizienten ist.

10. Verfahren nach Anspruch 8 oder 9, wobei der Widerstand (36) dazu konfiguriert ist, den zweiten Abschnitt des Stroms auf die Hälfte des Schwellenstrompegels zu begrenzen.

11. Verfahren nach Anspruch 8, 9 oder 10, wobei ein Widerstand (36) dazu konfiguriert ist, im Wesentlichen konstant zu bleiben.

12. Verfahren nach einem der Ansprüche 8 bis 11, wobei die Region mindestens ein Abschnitt eines Anstellwinkelsensors (10) ist.

13. Verfahren nach einem der Ansprüche 8 bis 12, ferner umfassend Bereitstellen einer Warnmeldung als Reaktion darauf, dass der gemessene Strom unter den Schwellenstrompegel fällt.

## Revendications

1. Système de chauffage (20) comprenant :
une source de tension (22) conçue pour fournir un courant :
un circuit de chauffage (16, 18, 26) couplé électriquement à la source de tension, le circuit de chauffage comprenant :
un réseau de chauffage (30) conçu pour fournir de la chaleur à une région à l'aide du courant ; et
un circuit de compensation (32) couplé électriquement à la source de tension en parallèle avec le réseau de chauffage, le circuit de compensation étant conçu pour maintenir le courant au-dessus d'un niveau de courant seuil lorsque le réseau de chauffage est utilisable ;
un capteur de courant (24) conçu pour mesurer un niveau de courant vers le circuit de chauffage et délivrer en sortie une alerte en réponse au fait que le courant chute en dessous du niveau de courant seuil ;
**caractérisé en ce que** le circuit de compensation (32) comprend une thermistance (34) et une
résistance de limitation de courant (36) couplée électriquement à la thermistance en série, la résistance de limitation de courant étant conçue pour empêcher le courant d'augmenter au-dessus du niveau de courant seuil lorsque le réseau de chauffage est inutilisable.

2. Système de chauffage selon la revendication 1, dans lequel la thermistance (34) est une thermistance à coefficient de température négatif.

3. Système de chauffage selon la revendication 1 ou 2, dans lequel la résistance de limitation de courant (36) est conçue pour limiter le courant circulant à travers celle-ci à la moitié du niveau seuil de courant.

4. Système de chauffage selon la revendication 1, 2 ou 3, dans lequel une résistance de la résistance de limitation de courant (36) est conçue pour rester sensiblement constante.

5. Système de chauffage selon une quelconque revendication précédente, dans lequel le réseau de chauffage (30) est un réseau de chauffage au titanate de baryum.

6. Système de chauffage selon une quelconque revendication précédente, dans lequel la région est au moins une partie d'un capteur d'angle d'attaque (10).

7. Système de chauffage selon une quelconque revendication précédente, dans lequel le capteur de courant (24) est une résistance shunt.

8. Procédé comprenant :
la fourniture d'un courant à un circuit de chauffage (16, 18, 26) à l'aide d'une source de tension (22), comportant :
la fourniture d'une première partie du courant à un réseau de chauffage (30) du circuit de chauffage ; et
la fourniture d'une seconde partie du courant à un circuit de compensation (32) du circuit de chauffage relié en parallèle au réseau de chauffage ;
le chauffage d'une région à l'aide du réseau de chauffage (30) ;
le réglage, à l'aide du circuit de compensation (32), de la seconde partie du courant sur la base d'une température de la région, de sorte qu'une somme de la première partie du courant et de la seconde partie du courant correspondant au courant fourni au circuit de chauffage (16, 18, 26) est maintenue au-dessus d'un niveau de courant seuil lorsque le réseau de chauffage (30) est utilisable ; et
la mesure du courant à l'aide d'un capteur de courant (24) ;
**caractérisé en ce que**
le réglage de la seconde partie du courant comporte l'augmentation de la seconde partie du courant à l'aide d'une thermistance (34) du circuit de compensation (32) ;
et **en ce que** le réglage de la seconde partie du courant comporte la limitation de la seconde partie du courant à l'aide d'une résistance (36) du circuit de compensation, la résistance en série avec la thermistance.

9. Procédé selon la revendication 8, dans lequel la thermistance (34) est une thermistance à coefficient de température négatif.

10. Procédé selon la revendication 8 ou 9, dans lequel la résistance (36) est conçue pour limiter la seconde partie du courant à la moitié du niveau seuil de courant.

11. Procédé selon la revendication 8, 9 ou 10, dans lequel une résistance de la résistance (36) est conçue pour rester sensiblement constante.

12. Procédé selon l'une quelconque des revendications 8 à 11, dans lequel la région est au moins une partie d'un capteur d'angle d'attaque (10).

13. Procédé selon l'une quelconque des revendications 8 à 12, comprenant en outre la fourniture d'une alerte en réponse au fait que le courant mesuré chute en dessous du niveau de courant seuil.
